Europäisches Patentamt

European Patent Office

Office européen des brevets

(19)

(11) Numéro de publication: **0 056 748**
**B1**

(12) # FASCICULE DE BREVET EUROPEEN

(45) Date de publication du fascicule du brevet:
09.04.86

(51) Int. Cl.⁴: **H 04 L 7/02**

(21) Numéro de dépôt: **82400029.3**

(22) Date de dépôt: **08.01.82**

(54) Procédé de synchronisation à la réception de signaux numériques transmis par paquets.

(30) Priorité: **16.01.81 FR 8100773**

(43) Date de publication de la demande:
**28.07.82 Bulletin 82/30**

(45) Mention de la délivrance du brevet:
**09.04.86 Bulletin 86/15**

(84) Etats contractants désignés:
**DE GB NL SE**

(56) Documents cités:
**US - A - 3 142 802**

**ELEKTRONIK, vol. 27, no. 2, février 1978 MUNICH (DE) W. BEIFUSS: "Digitale Phasensynchronisiereinheit für synchrone Datenübertragung" pages 52-56 1978 INTERNATIONAL ZÜRICH SEMINAR ON DIGITAL COMMUNICATIONS, mars 1978 NEW YORK (US) T. SVENSSON: "Methods for two-wire duplex digital transmission at 80 KBit/s on subscriber lines" pages c5.1-c5.4**

(73) Titulaire: **LIGNES TELEGRAPHIQUES ET TELEPHONIQUES L.T.T., 1, rue Charles Bourseul, F-78702 Conflans-Ste-Honorine (FR)**

(72) Inventeur: **Lamiral, Jean-Pierre, THOMSON-CSF SCPI 173, bld Haussmann, F-75360 Paris Cedex 08 (FR)**
Inventeur: **Auzet, Christian, THOMSON-SCF SCPI 173, bld Haussmann, F-75360 Paris Cedex 08 (FR)**

(74) Mandataire: **Weinmiller, Jürgen et al, Zeppelinstrasse 63, D-8000 München 80 (DE)**

LIBER, STOCKHOLM 1986

## Description

La présente invention a pour objet un procédé de synchronisation destiné à la réception de signaux numériques transmis par paquets.

Il est connu de l'art antérieur de synchroniser la réception de signaux transmis numériquement, par reconnaissance d'un motif de synchronisation qui est, soit adjoint aux informations émises (mot ou bit de synchronisation), soit inhérent au code utilisé pour les représenter (codes auto-synchronisants).

Dans le cas d'une transmission numérique par paquets, c'est-à-dire lorsque l'information numérique est transmise de manière itérative mais discontinue dans le temps sous la forme d'une pluralité de paquets espacés les uns des autres et apparaissant à un rythme donné, les dispositifs de synchronisation de l'art antérieur, qui se limitent classiquement à détecter un motif de synchronisation, par exemple sous la forme d'une transition présente en début de paquet, sont susceptibles de produire une fausse synchronisation, ou une désynchronisation lorsque des parasites sont présents en ligne, et même, le cas échéant un verrouillage de la synchronisation sur une série d'impulsions parasites répétitives.

La présente invention a ainsi pour objet un procédé de synchronisation ne présentant pas les défauts ci-dessus et permettant cependant une synchronisation rapide.

L'invention concerne donc un procédé de synchronisation à la réception de signaux numériques transmis en ligne par paquets comportant chacun une pluralité de transitions reçues récupération de rythme des paquets en ligne. Il comprend les opérations revendiquées dans la revendication 1.

Selon l'invention les signaux numériques sont transmis par paquets. Par contre le document US—A—3 142 802 divulgue un procédé où le récupération du rythme de la ligne d'une émission *continue* de transitions cedées est réalisée par remise à zéro d'un comptent diviseur.

L'invention sera mieux comprise à la lecture de la description qui va suivre donnée à titre d'exemple non limitatif et en se référant aux dessins ci-annexés et où:

—la figure $1_a$ représente un schéme de transcodage lors d'une transmission;

—les figures $1_b$ et $1_c$ représentent des paquets tels qu'utilisés dans les transmissions numériques;

—la figure 2 représente un circuit de synchronisation de l'art antérieur utilisé dans le cas d'une transmission numérique par paquets;

—les figures $3_a$, $3_b$ et $3_c$ illustrent la synchronisation effectuée suivant l'invention, et mettant en oeuvre un signal de fenêtre;

—la figure 4 représente des signaux significatifs de la synchronisation par paquets dans le cas d'un code 1B—2T;

—la figure 5 représente un schéma synoptique suivant l'invention;

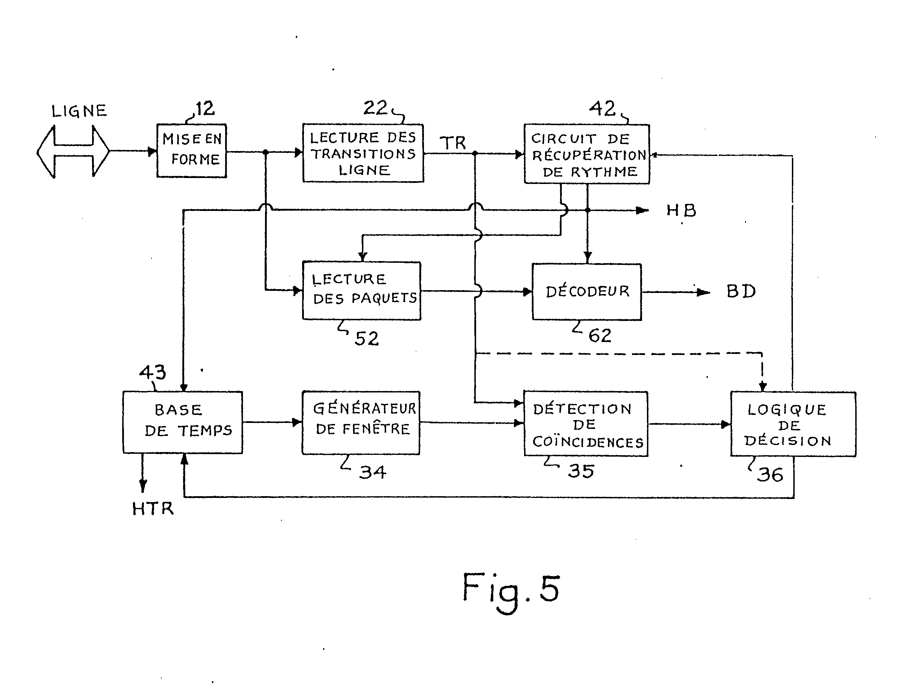

—la figure $6_a$ représente un schéma synoptique d'un mode de réalisation du dispositif décrit à la figure 5;

—la figure $6_b$ représente un diagramme d'état d'un critère d'acquisition et de perte de synchronisation;

—la figure $6_c$ illustre un mode de réalisation du circuit de formation d'un critère d'acquisition et de perte de synchronisation mentionné aux figures $6_a$ et $6_b$ et qui dérive d'un schéma proposé par le Comité Consultatif International Télégraphique et Téléphonique (C.C.I.T.T.);

—la figure $6_d$ représente un diagramme d'état illustrant le fonctionnement du circuit décrit à la figure $6_c$;

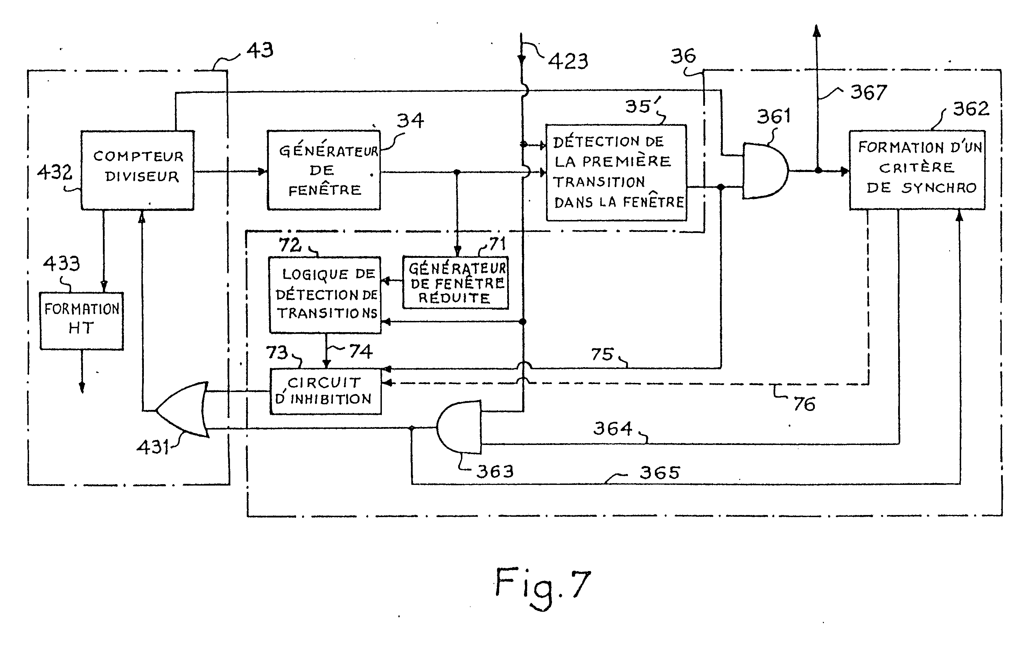

—la figure 7 est une variante de la figure $6_a$ mettant en oeuvre une deuxième fenêtre dite fenêtre réduite;

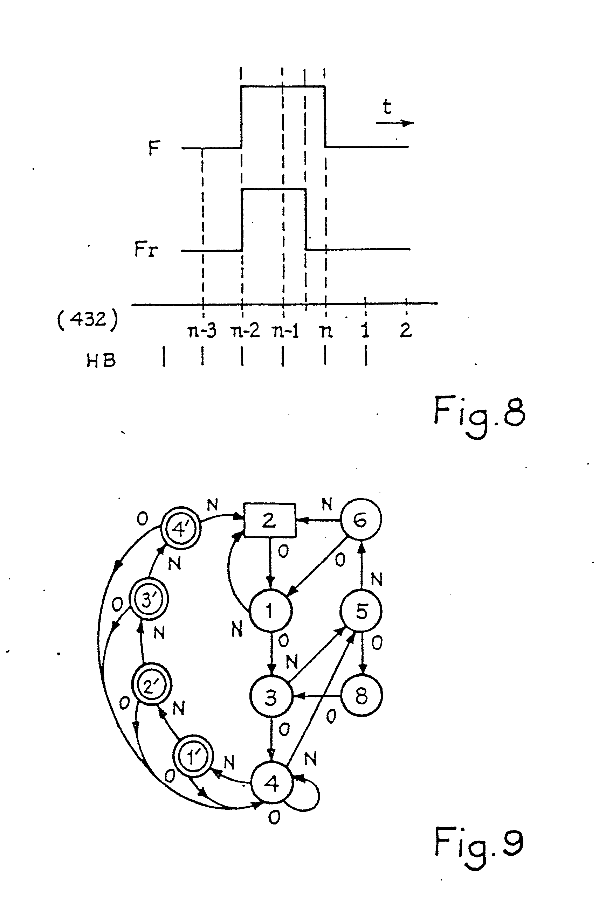

—la figure 8 illustre la position de ladite fenêtre réduite par rapport à la première fenêtre;

—la figure 9 représente un diagramme d'état correspondant à un mode de mise en oeuvre d'une fenêtre réduite.

La figure $1_a$ illustre une opération de transcodage, courante en téléphonie numérique et qui est réalisée à l'émission dans un module E ainsi qu'une opération de transcodage inverse réalisée à la réception dans un module R. L'information présente à l'entrée du module E est codée suivant un code $C_1$. Le module E a pour fonction de transcoder ce code en un code $C_2$ qui est adapté à une transmission par une ligne ou plus généralement par un canal de transmission K. Le module R de réception a pour fonction de réaliser le transcodage inverse du code $C_2$ pour retrouver le code $C_1$ qui est en général un code binaire. Le choix du code $C_2$ est dicté par des propriétés dont les principales sont généralement:

—comprimer la bande passante normalement nécessaire à la transmission;

—supprimer la nécessité d'une transmission de la composante continue;

—contenir des informations permettant la reconstitution d'une horloge (rythme) et autorisant un décodage non ambigü;

—donner intrinsèquement une détection d'erreur.

Par exemple, le code 1B/2T a été étudié par C. AUZET dans son article "Etude d'une famille de codes applicables à un système de transmission numérique à faible débit" publié dans la "Revue Technique THOMSON-CSF" (Vol. 12 No. 3—sept. 1980 pages 615 à 643).

Dans le cas d'une transmission numérique par paquets, la récupération du rythme des paquets en ligne est assurée par la présence d'une transition en début de paquet. Les transitions de début de paquet, ou plus généralement les motifs de verrouillage, sont produits dans le module E, soit avec augmentation du débit binaire par insertion systématique d'une transition ou d'un motif de verrouillage en début de paquet, soit sans augmentation du débit binaire en utilisant un code $C_2$ auto-synchronisant particulier, c'est-à-dire un code dont chaque mot transcodé commence par un bit produisant une transition au début du mot, par exemple une impulsion positive ou négative pour un code à n niveaux. A la réception, la lecture d'un tel élément fixé et répétitif doit permettre la récupération du rythme des paquets un ligne et la synchronisation de lecture.

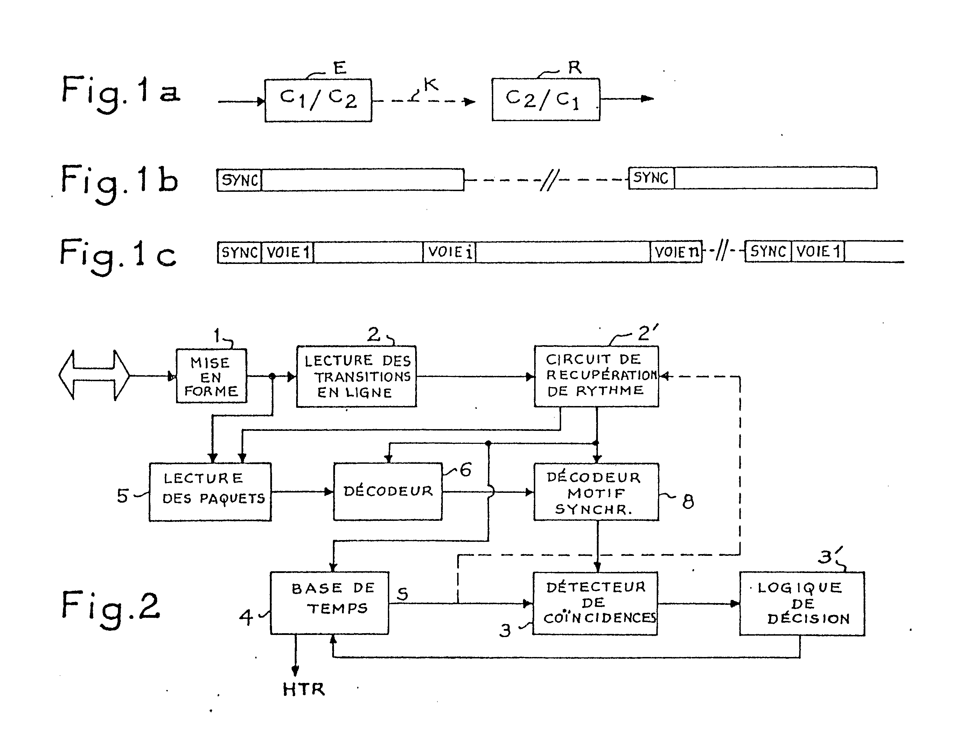

La figure 1b illustre ainsi une transmission numérique par paquets où des paquets sont équidistants dans le temps et comportent en leur début un motif de synchronisation, par exemple une transition.

La figure 1c représente un cas particulier de la figure 1b, où chaque paquet, qui comporte en son début un motif de synchronisation, fait l'objet du multiplexage de n voies numérotées de 1 à n et dont les signaux numériques apparaissent successivement. Une telle transmission numérique par paquets équidistants et comportant un multiplexage est réalisée couramment en téléphonie.

Ces types de transmission sont réalisés généralement à l'alternat, c'est-à-dire suivant une procédure consistant à émettre une série d'informations, telle qu'un paquet d'informations numériques, à une extrémité de la voie, à le recevoir de l'autre, puis à émettre un autre paquet d'informations dans l'autre sens et ainsi de suite. La synchronisation à la réception de tels paquets s'opère en général par récupération du rythme des paquets en ligne et sélection comme transition de synchronisation, de la première transition présente en début de paquet. Une telle synchronisation est décrite à la figure 2, où les signaux provenant d'une ligne sont soumis à une opération de mise en forme dans le circuit 1, puis, dans le circuit 2, à une opération de lecture des transitions présentes dans la ligne. Un circuit 2' de récupération de rythme reçoit les transitions lues en 2 et transmet au circuit 5 de lecture des paquets un signal synchronisé correspondant au rythme des transitions en ligne. Le circuit 5 reçoit également les transitions mises en forme par le circuit 1. Les paquets lus par le circuit 5 sont transmis à un décodeur 6 qui a pour fonction de réaliser le transcodage inverse mentionné plus haut lors de la description de la figure 1a. Le décodeur 6 ainsi qu'une base de temps 4 reçoivent du circuit 2' de récupération de rythme un signal d'horloge synchronisé correspondant au début de chaque mot transcodé. La sortie du décodeur 6 est reliée à un décodeur 8 de motif de synchronisation. Le motif de synchronisation peut être simplement une transition présente au début du paquet.

La base de temps 4, qui est en général un compteur dont le compte est égal, à un facteur près, au nombre d'éléments binaires correspondant au rythme des paquets en ligne, et qui est remis à zéro par le circuit 2' de récupération de rythme, produit à sa sortie S un signal dont le rythme est celui des paquets en ligne, ainsi qu'un signal (HTR) représentatif du début et de la fin d'un paquet. L'ensemble des circuits 2' et 4 permet ainsi la récupération du rythme des paquets en ligne.

Les sorties du décodeur 8 et de la base de temps 4 sont introduites dans un détecteur de coïncidences 3 dont la sortie est reliée à l'entrée d'une logique de décision 3. La sortie de la logique 3' remet à zéro la base de temps 4 lorsque la coïncidence entre le motif de synchronisation et la base de temps est présente de manière itérative selon un critère fixé à l'avance. Dans le cas contraire, le critère détermine une séquence de perte de synchronisation. Enfin, si le code n'est pas auto-synchronisant, la sortie S de la base de temps 4 est également utilisée pour mettre en phase le signal d'horloge synchronisé destiné à la lecture de chaque mot.

Une telle synchronisation est sensible à toutes les impulsions parasites présentes entre les paquets et qui perturbent la reconnaissance du motif de synchronisation. Elle est donc susceptible de se désynchroniser facilement en présence de taux de parasites en ligne assez faibles.

La présente invention concerne donc un procédé et un dispositif de synchronisation à la réception de signaux numériques transmis par paquet, et plus particulièrement mais non exclusivement dans le cas d'une transmission à l'alternat, et permettant d'éviter une mauvaise synchronisation ou une désynchronisation sur des parasites, notamment isolés ou répétitifs, présents entre les paquets. Le procédé et le dispositif suivant l'invention sont avantageusement utilisés dans le cas d'une transmission à l'alternat où la présence d'un intervalle important entre les paquets rend d'autant plus probable une synchronisation erronée sur des impulsions parasites.

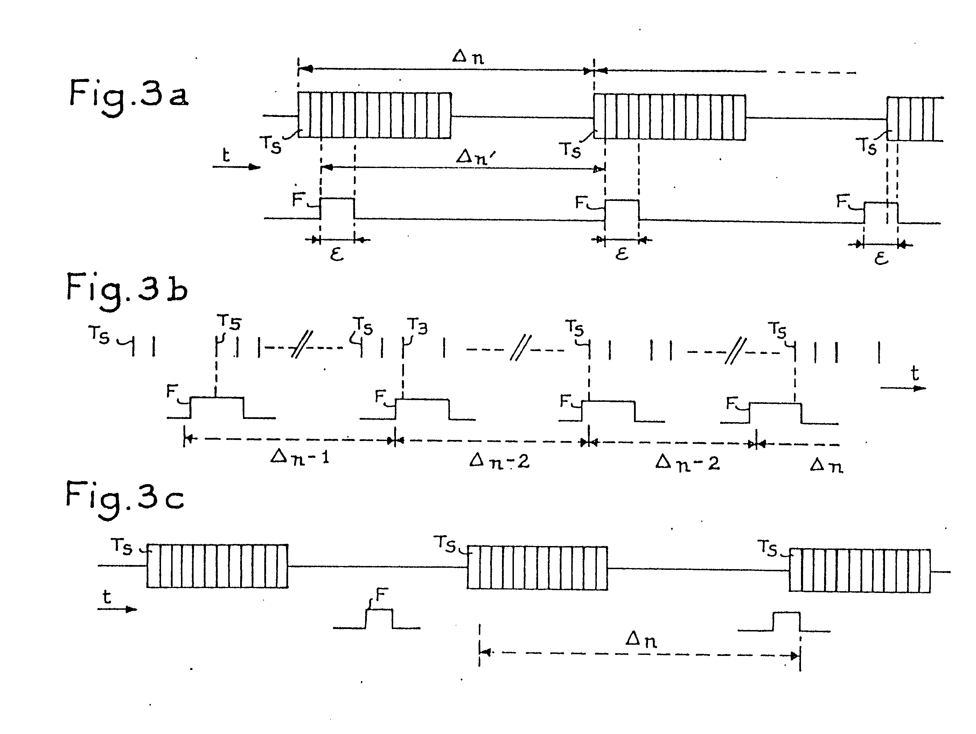

Le schéma de la figure 3a illustre le procédé suivant l'invention, où un signal de fenêtre F de largeur ε donnée est généré en phase stabilisée à des intervalles Δ n correspondant au rythme des paquets en ligne qui est récupéré à partir d'un circuit recevant les transitions lues à la réception. Cette fenêtre, représentée sous la forme d'un créneau, comporte une transition qui indique son début et une transition qui indique sa fin. Toute transition présente dans le signal reçu entre le début et la fin de la fenêtre constitue une coïncidence. On notera que le terme fenêtre englobe tout signal ou série de signaux permettant de réaliser des coïncidences temporelles avec une ou plusieurs transitions. Le traitement logique de ces signaux de coïncidence, selon un critère de coïncidence, permet de décider de la modification éventuelle de l'intervalle entre deux fenêtres successives, de telle sorte que celle-ci finisse par se positionner en début de paquet. Ainsi, lors du début de la réception de paquets représentés à la figure 3a et qui sont séparés par des intervalles constants Δ n, la première fenêtre F de largeur ε qui se trouve par exemple située dans le premier paquet reçu, sera suivie d'une seconde fenêtre F de largeur ε séparée d'un intervalle Δ n' inférieur à l'intervalle Δ n, cette opération se poursuivant de paquet à paquet tant que la (ou les) transition(s) détectées pendant la durée d'une fenêtre ne correspond(ent) pas à un critère donné. Ceci constitue une étape de recherche de synchronisation. La fenêtre F va ainsi remonter progressivement en début de paquet en se positionnant de préférence de telle sorte que la transition de synchronisation $T_s$ présente au début de chaque paquet se situe à la fin de la fenêtre. Le critère de coïncidence mentionné plus haut peut être choisi de telle sorte qu'il est satisfait lorsqu'une transition de synchronisation $T_s$ est présente dans une partie choisie de la fenêtre F, par exemple à la fin de celle-ci. Lorsque la ou les coïncidences détectées pendant la durée d'une fenêtre satisfont le critère de coïncidence choisi, l'intervalle entre celle-ci et la fenêtre suivante est maintenu égal à l'intervalle Δ n correspondant au rythme des paquets en ligne. Ceci constitue une étape d'acquisition de la synchronisation. Après confirmation, éventuellement, la synchronisation est acquise (étape de maintien). L'utilisation d'un tel procédé mettant en oeuvre une fenêtre permet d'assurer que le calage de la synchronisation est toujours correct, étant donné que la transition servant à synchroniser la lecture des paquets devra toujours satisfaire le critère mentionné plus haut. Il en résulte que, si le critère en vient à n'être plus satisfait, éventuellement après confirmation, une nouvelle étape de recherche de synchronisation va intervenir et l'intervalle entre les fenêtres successives sera modifié jusqu'à ce que la synchronisation soit de nouveau acquise. Un signal de synchronisation sera significatif uniquement pendant l'étape de synchronisation acquise.

A titre d'exemple non limitatif, un critère de coïncidence utilisable consiste à détecter la position de la première transition présente dans la fenêtre. Le signal de fenêtre suivant sera généré de telle manière que la fin de celle-ci soit séparée de ladite première transition par un intervalle égal au rythme des paquets en ligne. Ainsi, toutes les transitions détectées dans une position située avant la fin d'une fenêtre quelconque provoquera une décrémentation de l'intervalle entre les fenêtres et une remontée de celles-ci vers la tête de paquet. Une telle synchronisation est illustrée à la figure 3$_b$ où la première transition détectée dans la fenêtre, dont la largeur est à titre d'exemple de trois éléments et correspondant au premier paquet reçu, est la transition $T_5$ située 4 éléments après la transition de synchronisation $T_s$. Dans le paquet suivant, la fin de la fenêtre F est situé au niveau de la cinquième transition du paquet. La première transition détectée dans la fenêtre est la transition $T_3$. Dans le paquet suivant, la fin de la fenêtre F dont la largeur correspond à 3 éléments, sera située au niveau de la troisième transition du paquet. Dans ces conditions, la première transition détectée par la fenêtre sera cette fois la transition de synchronisation $T_s$. Il en résultera que la synchronisation pourra être acquise dès le paquet suivant où la transition $T_s$ sera située à la fin de la fenêtre F ou après confirmation effectuée selon un critère logique. Les fenêtres F suivantes seront séparées par des intervalles Δ n correspondant au rythme des paquets en ligne.

On a envisagé ci-dessus le cas où la première fenêtre produite se situe dans un paquet. Dans le cas contraire, on n'observe aucune transition pendant la durée de la fenêtre, et il est dès lors préférable plutôt que de raccourcir l'intervalle entre deux fenêtres successives, d'attendre la première transition présente sur la ligne qui, en l'absence de perturbation sera la transition de synchronisation présente au début d'un paquet. Cette situation est illustrée à la figure 3$_c$, où la fenêtre C se trouve entre deux paquets successifs. La première transition détectée sera la transition $T_s$ du paquet suivant et la fenêtre suivante sera alors générée de façon telle que la fin de celle-ci est séparée de ladite transition $T_s$ du second paquet par un intervalle Δ n correspondant au rythme des paquets en ligne. Cette configuration permet une acquisition très rapide de la synchronisation.

On va maintenant préciser les paramètres permettant de déter miner la largeur de la fenêtre d'une manière optimale dans le cas où on utilise un critère relatif à la position d'une transition dans la fenêtre. Tout d'abord, la largeur de la fenêtre ne peut être inférieur à celle de 2 éléments en ligne, faute de quoi la détection de la première transition ne pourrait évidemment en aucun cas permettre à la fenêtre de remonter un paquet. D'autre part, il est préférable que la largeur de la fenêtre soit supérieure au nombre d'absences de transitions successives susceptibles de se présenter dans un paquet. Cette largeur de fenêtre assure que, lorsque la fenêtre se trouve au niveau d'un paquet, on détectera nécessairement au moins une transition correspondant à une coïncidence. Toutefois, cette condition n'assure pas nécessairement une remontée optimale de la fenêtre le long du paquet étant donné qu'une transition présente au niveau de la fenêtre pourrait néanmoins se situer à la fin de celle-ci, et de façon par hasard récurrente. Pour éviter cet inconvénient, il est avantageux de donner à la fenêtre une largeur au moins supérieur de 2 éléments au nombre d'absences de transitions successives susceptibles d'exister dans un paquet. On sera ainsi certain que deux transitions seront présentes au niveau de la fenêtre lorsque celle-ci se trouve située dans un paquet, ce qui assurera une remontée de celle-ci à chaque paquet jusqu'à ce que la synchronisation soit acquise. Au vu de la description ci-dessus, on comprendra que, plus la largeur de la fenêtre est grande, plus l'acquisition de la synchronisation par remontée d'un paquet est rapide et, par contre plus la sensibilité de la synchronisation à des impulsions parasites présentes dans la fenêtre est élevée. De ce point de vue, la détermination de la largeur de la fenêtre sera obtenue en faisant un compromis entre la vitesse de synchronisation et sa relative insensibilité aux parasites présents sur la ligne.

Selon une première variante, un critère de coïncidence utilisable consiste à compter le nombre de transitions présentes pendant la durée de la fenêtre. Si ce nombre est supérieur à 1, l'intervalle entre cette fenêtre et la fenêtre suivante sera réduit d'une quantité correspondant à un élément au moins. Si ce nombre est égal à 1, l'intervalle entre la fenêtre et la fenêtre suivante sera maintenu à une valeur correspondant au rythme des paquets en ligne. Si ce nombre est 0, on procèdera comme dans le cas de la figure 3$_c$. Le choix de ce critère permet également à la fenêtre de remonter le paquet jusqu'à ce que la transition de synchronisation T$_s$ se trouve à la fin de celle-ci. Les conditions mentionnées plus haut quant au choix de la largeur de la fenêtre sont valables dans le cas de ce critère, comme elles l'étaient dans le cas du critère précédent.

Selon une deuxième variante, le critère de coïncidence est la détection à la fin de la fenêtre d'un motif de coïncidence. S'il n'est pas satisfaisant, l'intervalle entre les fenêtres est modifié.

Pour éviter une désynchronisation dans le cas où la transmission d'une transition de début de paquet aurait été défectueuse, le procédé selon l'invention comporte une opération de détection de synchronisation lorsque le critère est satisfait par intermittence ou ne l'est plus du tout, ladite opération consistant à produite de nouveau une étape de recherche de synchronisation, selon un critère logique de décision.

Le procédé décrit ci-dessus assure une synchronisation rapide et efficace d'une transmission numérique par paquets, mais cependant il reste susceptible de se désynchroniser au cas où une impulsion due à un parasite se trouverait au niveau de la fenêtre et avant le début du paquet. Un mode de réalisation préféré de l'invention consiste alors à générer une deuxième fenêtre dite fenêtre réduite dont le début est le même que ladite fenêtre et qui est plus courte d'un intervalle correspondant à un élément et à détecter l'absence de transition dans ladite fenêtre réduite. Seule la présence itérative d'une transition dans des fenêtres réduites successives produit un recalage de la première fenêtre sur la première transition détectée. Le recalage de la première fenêtre est ainsi ajourné jusqu'à ce que la présence itérative d'une transition dans la fenêtre réduite permette de penser que c'est cette dernière qui est en réalité la transition de synchronisation, c'est-à-dire qu'il y a eu par exemple une dérive du motif de synchronisation au cours du temps. Si des transitions n'apparaissent que de manière intermittente ou fugitive dans la fenêtre réduite, il n'y aura pas de modification de l'intervalle entre les premières fenêtres successives, étant donné que le caractère peu stable de ces transitions indique qu'elles sont dues à des parasites présents sur la ligne. Il y a lieu de remarquer que cette opération de génération d'une fenêtre réduite n'est utile que lors de l'étape d'acquisition et de maintien de la synchronisation. En effet, si on génère une telle fenêtre pendant l'étape dite de recherche de synchronisation, la remontée des paquets par la première fenêtre risque d'être très sensiblement ralenti.

Egalement à titre de variante, le procédé suivant l'invention comporte un décodage logique de l'acquisition et/ou du maintien de la synchronisation qui produit une diminution de la largeur ε de la fenêtre F, de préférence jusqu'à un seul élément.

On va maintenant décrire des moyens de mise en oeuvre du procédé ci-dessus, en se référant à un code 1B/2T à titre d'exemple non limitatif (mots de un élément binaire transcodés en deux éléments ternaires en ligne).

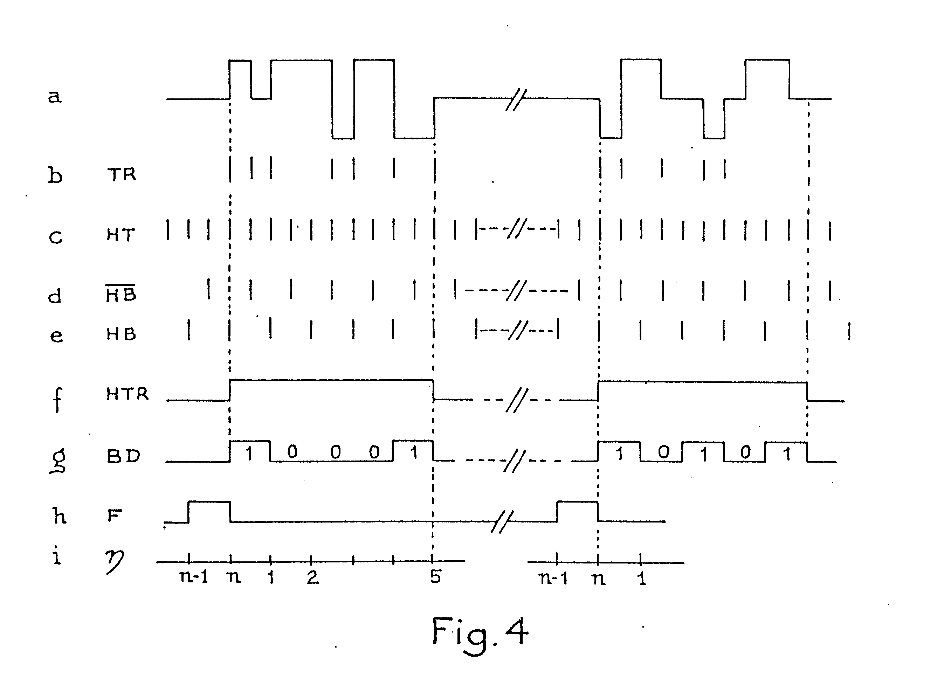

La figure 4 représente en a les signaux en ligne mis en forme et correspondant à des paquets successifs comportant chacun dix éléments, et en b les transitions TR lues. Une horloge ternaire HT est représentée en c, laquelle correspond au rythme des transitions présentes en ligne c'est-à-dire qu'elle présente des transitions séparées par un intervalle de un élément. Une horloge binaire est issue de l'horloge ternaire T par une opération de division par 2 (code 1B/2T) et correspond ainsi au rythme des mots ternaires, et ses deux phases possibles sont désignées respectivement par $\overline{HB}$ en de et HB en e. Lorsque la synchronisation est acquise, et le cas échéant confirmée, l'horloge binaire est remise à l'heure, en principe au début de chaque paquet, et fournit en permanence le signal HB avec la phase correcte.

Un signal HTR représentatif du début et de la fin de chaque paquet est représenté en f sous la forme d'un signal d'enveloppe. Enfin, les éléments binaires décodés BD sont représentés en g. Les trois signaux HB, HTR et BD sont fournis à l'utilisateur ce qui lui permet de lire les informations binaires de manière cadencée par l'horloge HB, le signal HTR déterminant la position du début et de la fin de chaque paquet. La fenêtre F est représentée en h, positionnée en début de paquet (synchronisation acquise), alors qu'en i est indiqué le compte d'un compteur utilisé pour produire le signal de fenêtre et le signal HTR comme il sera décrit plus loin.

La figure 5 représente un circuit 12 de mise en forme recevant les signaux présents en ligne et les introduisant d'une part dans un circuit de lecture des transitions en ligne 22 et d'autre part dans un circuit 52 de lecture des paquets. Les transitions TR lues par le circuit 22 sont introduites ·dans· un circuit 42 de récupération de rythme ainsi que dans un circuit 35 de détection de coïncidences. Le circuit 42 produit un signal d'horloge de ligne (horloge ternaire HT) en direction du circuit 52 de lecture des paquets. Le circuit 42 produit, dans le cas de codes de blocs, un signal d'horloge de mot (horloge binaire HB) qui est reçu par un décodeur 62 et par une base de temps 43, laquelle est en général constituée par un compteur diviseur. Ce signal est déduit du signal de l'horloge de ligne par une opération de division (par 2 dans le cas d'un code 1B/2T). Les transitions lues dans le circuit 52 sont introduites dans le décodeur 62. La base de temps 43 reçoit les signaux de l'horloge de ligne HT ou de préférence de l'horloge de mot HB et introduit dans un générateur de fenêtre 34 un signal dont la périodicité, en régime stationnaire, correspond à celle des paquets. Les coïncidences détectées pendant la durée de la fenêtre sont introduites dans un circuit logique de décision 36 qui, d'une part produira un signal de remise à zéro de la base de temps 43, et d'autre part un signal de synchronisation en direction du circuit 42 de récupération de rythme.

Comme on l'a mentionné plus haut, à propos de la figure 2, le circuit 42 et la base de temps 43 constituent un circuit de récupération du rythme des paquets en ligne.

Envisageons le cas où la base de temps 43 est un compteur réalisant une division selon un rapport n, où n est le nombre d'éléments correspondant à l'intervalle entre deux débuts de paquets reçus, et qui reçoit les signaux de l'horloge de ligne HT. Le compteur émet une impulsion en direction du générateur de fenêtre 34 lorsqu'il a atteint un compte (n−p), p étant le nombre d'éléments définissant la largeur de la fenêtre F. En l'absence d'une commande de remise à zéro provenant de la logique de décision 36, la base de temps émet une impulsion de commande en direction du générateur de fenêtre 34 à des intervalles correspondant à l'espacement des paquets et le compteur se remet de lui-même à zéro lorsqu'il atteint le compte n, d'ailleurs simultanément avec l'arrivée de la transition de synchronisation. Par contre, lorsque le circuit logique de décision 36 émet des signaux correspondant à une configuration de recherche de synchronisation, c'est-à-dire qu'une transition est présente q éléments avant la fin de la fenêtre, la remise à zéro de la base de temps avant que celle-ci ait atteint le compte n, à savoir le compte (n−q), aura pour conséquence que la fenêtre suivante sera avancée d'un compte correspondant q.

Il est cependant préférable, comme représenté figure 5, d'introduire dans le compteur constituant la base de temps 43 les signaux HB de l'horloge de mot, le compteur ayant dans ce cas un rapport de division égal au nombre de mots correspondant à l'intervalle entre deux débuts de paquets reçus. Dans ce cas, la largeur de la fenêtre sera, sauf à prévoir un élément retardateur dans le générateur de fenêtre, égale au nombre d'éléments constituant chaque mot (2 dans le cas d'espèce) ou à un multiple de celui-ci. La fin de la fenêtre correspond bien ainsi au début d'un mot quand l'horloge de mot HB est synchronisée. Ainsi, si on se réfère aux lignes h et i de la figure 4, une fenêtre F de largeur deux éléments est générée lorsque le compteur atteind le compte n−l et se termine lorsque celui-ci atteint le compte n, simultanément avec l'impulsion de synchronisation. Le signal HTR d'enveloppe se termine lorsque le compteur atteint le compte n = 5 égal au nombre de mots d'un paquet.

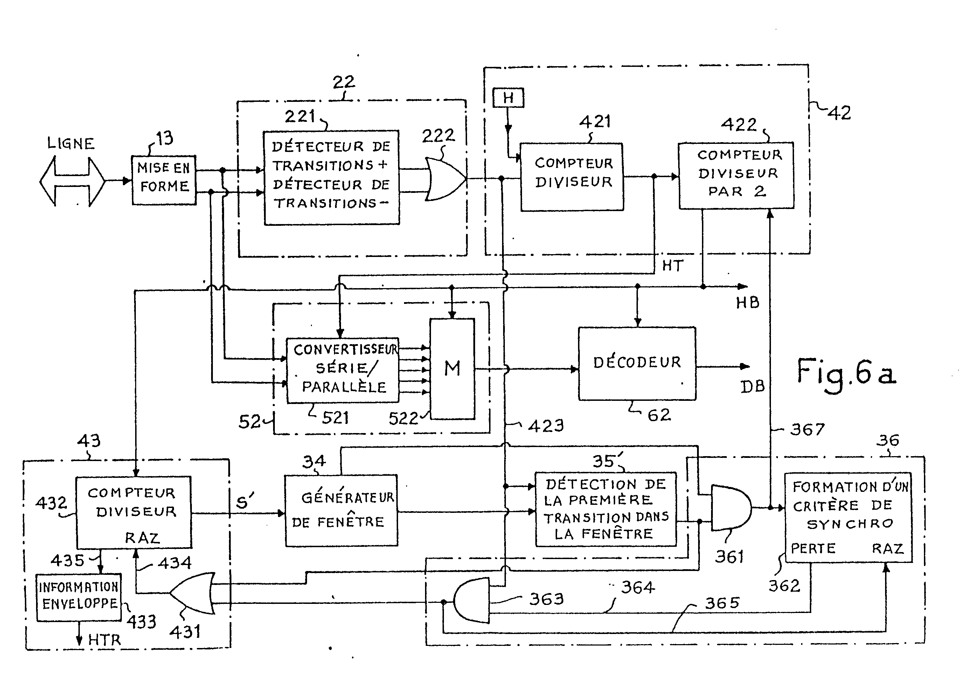

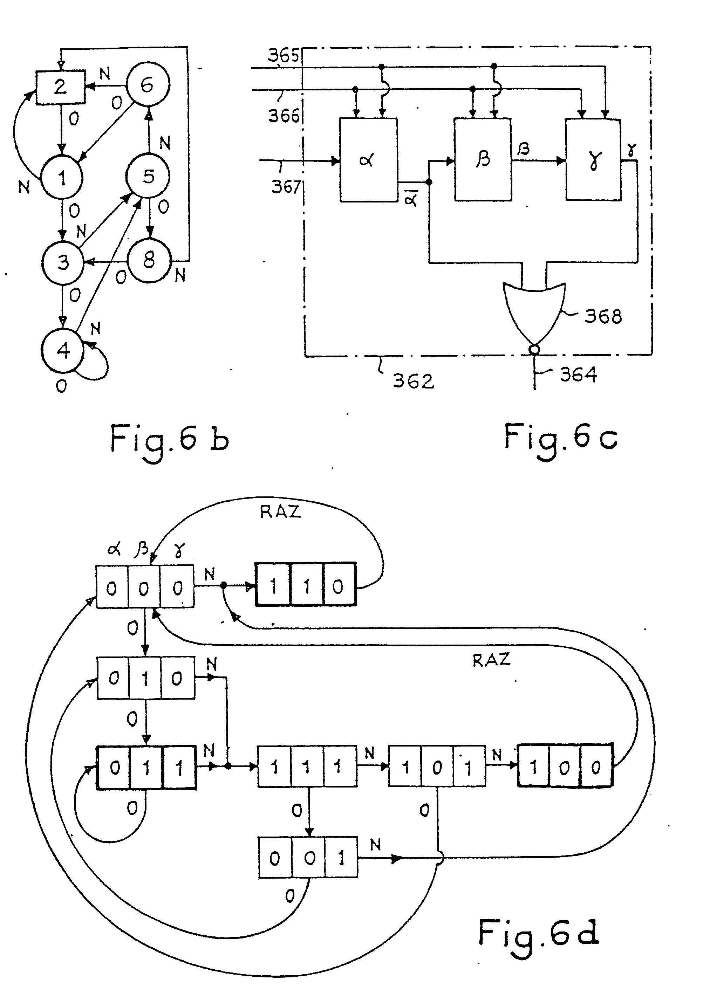

La figure 6a représente un mode de réalisation du schéma de la figure 5 qui, à titre d'exemple a été également décrit dans le cas de la réception de signaux ternaires dont les mots comportent deux éléments (code 1B/2T). Le circuit 22 de lecture des transitions en ligne se compose d'un détecteur 221 de transition + et de transition − dont les signaux de sortie sont introduits à l'entrée d'une porte OU 222. Le circuit 42 comporte un compteur diviseur 421 recevant les signaux d'une horloge locale H et qui est remis à zéro par les signaux présents à la sortie de la porte 222. Le rapport de division du compteur diviseur est tel que les signaux de sortie qu'il délivre constitue une horloge de ligne (horloge ternaire HT), c'est-à-dire que son rythme correspond à celui de l'apparition des transitions successives dans un paquet. Sa remise à zéro constitue une mise en phase par rapport aux transitions reçues. Le compteur diviseur par 2 référencé 422 reçoit les signaux HT d'horloge ternaire et produit à sa sortie des signaux d'horloge de mot HB c'est-à-dire dont le rythme correspond à celui de l'apparition des mots d'un paquet. Le circuit 52 de lecture des paquets comporte un convertisseur série parallèle 521 qui reçoit les signaux de ligne mis en forme par le circuit 13 et qui les introduit séquentiellement à une cadence donnée par l'horloge ternaire HT, dans une mémoire 522. Les transitions mises en mémoire mot par mot sont ensuite lues à une cadence correspondant à l'horloge de mot HB et sont introduits séquentiellement dans le décodeur 62 où ils sont décodés à la même cadence. Le circuit 43 qui constitue une base de temps pour le générateur de fenêtre 34 reçoit les signaux d'horloge binaire HB fourni par le compteur diviseur 422, au niveau d'un compteur diviseur 432 dont le rapport de division est tel qu'il produit à une sortie S' des signaux dont la périodicité correspond au rythme des paquets en ligne. Par exemple, si on se place dans le cas d'une transmission à l'alternat où dans le même sens, des paquets de 40 mots de deux éléments sont séparés par des intervalles correspondant à 88 mots de deux éléments, le rythme d'apparition des paquets à la réception correspondra à 128 mots de deux éléments, et par conséquent on utilisera un compteur 432 qui divisera par un rapport n = 128 le signal d'horloge de mot HB.

Pour produire une fenêtre de largeur 2p éléments, le compteur 432 émettera un signal de commande en direction du générateur de fenêtre lorsque son compte atteindra (128−p), à savoir 127 dans le cas d'une fenêtre d'une largeur 2 éléments. Ainsi, la fin de la fenêtre correspondra au moment où le compteur atteindra le compte 128 où il se remet de lui-même à zéro. Un circuit 35' détecte la première transition présente dans la fenêtre par exemple grâce à un circuit de verrouillage à deux bascules. Les signaux sortants du circuit 35' sont introduits dans le circuit logique de décision 36 au niveau d'un circuit 362 de formation d'un critère de synchronisation, de préférence par l'intermédiaire d'une porte ET 361 qui reçoit du générateur de fenêtre 34 (ou compteur diviseur 432) un signal de largeur au plus égale à un élément et représentant la fin de la fenêtre, ce signal constituant en quelque sorte une fenêtre auxiliaire puisqu'il vise à renseigner le critère sur la coïncidence entre une transition et la fin de la fenêtre. On est ainsi assuré que l'évolution du critère aura lieu en fonction de la présence ou à l'absence de la première transition à la fin de la fenêtre. D'autre part, les signaux sortants du circuit 35' sont également introduits à

l'entrée d'une porte OU 431 qui fait partie du circuit 43 et dont la sortie 434 remet à zéro le compteur diviseur 432. Cette boucle permet de réaliser la remontée d'un paquet par la fenêtre lors de la recherche de synchronisation. Le circuit 362 produit à sa sortie un signal représentatif de la perte de synchronisation qui est introduit à l'entrée d'une porte ET 363 qui reçoit également les transitions détectées à la sortie de la porte OU 222. La sortie de la porte ET 363 est reliée à l'autre entrée de la porte OU 431 dont la sortie remet à zéro le compteur diviseur 432. Ce bouclage permet alors, en cas de perte ou d'absence de synchronisation, de recaler la synchronisation sur la première transition présente en ligne.

La sortie de la porte ET 363 est d'autre part reliée par une liaison 365 à l'entrée de remise à zéro du circuit 362 de formation d'un critère de perte de synchronisation. La sortie du circuit ET 361 introduit, par une liaison 367, à l'entrée de remise à zéro du compteur diviseur 422, un signal de synchronisation réalisant une mise en phase de la synchronisation "mot". D'autre part, le compteur diviseur 432 émet en 435 des signaux représentatifs du décodage de deux donnés de ses états en direction d'un circuit 433 de formation d'un signal d'enveloppe HTR correspondant au début et à la fin de la réception d'un paquet. Ce signal constitue également, du moins quant à son front de montée, un signal représentatif de la synchronisation. Il peut être également utilisé comme signal d'autorisation du convertisseur série parallèle 521.

La figure 6$_b$ représente un exemple de critère utilisable dans le circuit 362. Il va de soi que l'utilisation de tels critères est courante dans la technique des transmissions et que par voie de conséquence, ce critère n'est donné qu'à titre illustratif. Le choix d'un tel critère est en tout état de cause un compromis entre la rapidité et la stabilité de la synchronisation.

La position 2 correspond à une absence de synchronisation (recherche de synchronisation). La position 4 bouclée sur elle-même correspond à une synchronisation acquise (maintien de la synchronisation) après confirmation du critère de coïncidence dans trois fenêtres successives (2 → 1 → 3 → 4). Les positions intermédiaires (1, 3, 5, 6, 8) correspondent ainsi à l'acquisition de la synchronisation. Celle-ci a lieu soit à partir d'une étape 2 de recherche de synchronisation, soit à partir de l'étape 4. Lorsqu'au plus deux absences successives de coïncidence se produisent, une nouvelle opération logique d'acquisition de la synchronisation est mise en oeuvre sans modification de la position de la fenêtre F. Par contre, le perte de synchronisation, donc le retour à la position 2, et l'autorisation de remise à zéro du compteur 432 sur la première transition détectée est provoquée par exemple par trois absences successives de coïncidence.

La figure 6$_c$ est un mode de réalisation du circuit 362 de formation d'un critère de perte de synchronisation, et qui dérive d'un schéma proposé par le C.C.I.T.T. Il se compose de trois

bascules, α, β et γ montes en registre à décalage. Une ligne 366 introduit dans le registre à décalage un signal de cadence au rythme de paquets en ligne élaboré à partir du compteur 432 ou du générateur de fenêtre 34. Une ligne 365 reliée à la sortie du circuit ET 363 sert à la remise à zéro des bascules. La ligne 367 introduit la sortie du circuit ET 361 à l'entrée du compteur α de telle sorte qu'à une transition détectée en fin de fenêtre, corresponde un zéro dans le compteur α. La sortie inversée $\bar{\alpha}$ du compteur α est introduite dans le compteur β, et la sortie non inverseuse du compteur β est introduite dans le compteur γ. Le fonctionnement du registre à décalage correspond alors à la logique de la figure 6$_c$.

On adoptera la stratégie suivante: il y aura perte de synchronisation s'il n'y a pas de transition dans trois fenêtres consécutives à partir de l'état stable 011 (α = 0, β = 1, γ = 1). Ceci correspond à l'identification de l'état 100, comme on le voit sur le diagramme de la figure 6$_d$. Il y aura également perte de synchronisation et par conséquent remise à zéro du compteur entraînant une nouvelle recherche si, à partir de l'état 000, il n'y a pas de transition présente dans la fenêtre suivante. Ceci correspond à l'état 110. Le décodage simultané de ces deux états est réalisé lorsque α = 1 et γ = 0, soit: $\alpha.\bar{\gamma} = 1$ ou $\overline{\alpha + \gamma} = 1$.

Cette détection est en conséquence réalisée par le circuit OU inverseur 368 qui reçoit $\bar{\alpha}$ à une de ses entrées et γ à son autre entrée et dont la sortie 364 constitue une des entrées du circuit ET 363.

Le circuit décrit à la figure 6$_a$ présente l'inconvénient de remettre à zéro le compteur diviseur 432 systématiquement en présence de la première transition présente dans la fenêtre. La synchronisation reste donc sensible à tout parasite présent dans la première partie de la fenêtre, ce qui présente un léger inconvénient en pratique. Pour éviter ce phénomène, on adjoint au dispositif décrit à la figure 6$_a$ un circuit 71 produisant une deuxième fenêtre dite fenêtre réduite Fr dont le début est le même que la première fenêtre mais qui est plus courte d'un élément (voir figure 8). Un circuit logique de détection de transition 72 (voir figure 7) reçoit les transitions en ligne par l'intermédiaire d'une ligne 423 reliée à la sortie du circuit OU 222 de la figure 6$_a$ et le signal de fenêtre réduite Fr et détecte leurs coïncidences. Le circuit logique 72 n'émet de signal de sortie 74 que lorsqu'au moins une transition est présente dans un certain nombre de fenêtres réduites Fr successives. Ceci est réalisé par exemple par incrémentation par les transitions présentes dans la fenêtre réduite, d'un compteur remis à zéro tous les k paquets ainsi que par l'absence de transition dans la fenêtre réduite Fr. Un circuit d'inhibition 73 reçoit les transitions présentes à la sortie du circuit 35 de détection de la première transition dans la fenêtre et n'autorise leur transmission à une des entrées du circuit OU 431 dont la sortie remet à zéro le compteur diviseur 432, qu'en présence du signal de sortie 74 provenant du circuit logique 72.

Le circuit décrit à la figure 7 rend insensible la synchronisation sur tout parasite, même présent pendant la durée de la première fenêtre. Cependant, la mise en service permanente du circuit d'inhibition 73 est de nature à perturber plus ou moins la recherche de synchronisation au cas où la première fenêtre est amenée à remonter le long des paquets successifs.

Pour éviter cet inconvénient, le circuit 362 de formation d'un critère de synchronisation décode un état correspondant par exemple à une synchronisation acquise (011 dans l'exemple de la figure 6$_d$) et produit dans ce cas, un signal de validation transmis par la ligne 76 et autorisant le fonctionnement du circuit d'inhibition 73.

Un diagramme d'état du fonctionnement avec la fenêtre réduite est représenté à la figure 9 où le retour à l'état 2 se produit seulement en présence de 5 coïncidences successives détectées dans la fenêtre réduite Fr, et seulement à partir de l'état 4 de maintien de la synchronisation acquise.

A titre de variante, il est également possible, qu'une fenêtre réduite soit mise en oeuvre ou non, et lorsque la synchronisation est dans sa phase d'acquisition et/ou de maintien, de diminuer la largeur de la fenêtre F jusqu'à un seul élément correspondant à la stricte confirmation de la synchronisation. Par exemple, il suffit de détecter les états 1, 3, 5, 6, 8 et/ou 4 (011 pour ce dernier dans l'exemple de la figure d$_d$) et d'utiliser cette détection pour commuter le générateur de fenêtre sur un mode de fonctionnement approprié.

L'invention qui a été plus particulièrement décrite dans le cas d'un code 1B/2T est utilisable avec tous les types de codes envisagés, que la transmission soit ou non à l'alternat. D'autre part, elle s'applique également à toutes les transmissions où les paquets, de longueur constante ou variable, sont répétitifs, c'est-à-dire que la récupération du signal d'enveloppe HTR ne met pas forcément en oeuvre une horloge locale, mais peut être réalisée à partir des signaux reçus eux-mêmes, notamment par récupération directe du rythme des transitions.

**Revendications**

1. Procédé de synchronisation à la réception de signaux numériques transmis en ligne par paquets comportant chacun une pluralité de transitions, la réception mettant en oeuvre la détection des transitions reçues et la récupération du rythme des paquets en ligne, ledit procédé comprenant les opérations suivantes de synchronisation sur le début des paquets:

a) générer des signaux d'une première fenêtre (F) de largeur donnée à des intervalles correspondant au rythme des paquets en ligne,

b) détecter au moins une transition éventuellement présente dans les signaux reçus pendant la durée de chaque fenêtre (F) et déterminer si la ou les transitions détectées pendant la durée de chaque fenêtre satisfont un critère de coïncidence correspondant au début de chaque paquet, consistant en la présence d'une transition à la fin du signal de fenêtre,

c) si le critère n'est pas satisfait, modifier l'intervalle (Δ n') entre le début du signal de fenêtre et le début du signal de fenêtre suivant, ceci constituant une étape de recherche de synchronisation, ladite modification de l'intervalle (Δ n') consistant à positionner une fenêtre suivante de telle sorte que la fin de celle-ci soit séparée de la première transition présente dans la fenêtre précédente par un intervalle Δ n égal au rythme des paquets en ligne,

d) si le critère est satisfait, maintenir ledit intervalle (Δ n) égal au dit rythme des paquets en ligne et produire un signal représentatif de la synchronisation, ceci constituant une étape d'acquisition et de maintein de la synchronisation, et ledit procédé comprenant en outre, lors de l'étape de maintien de la synchronisation, une opération de génération d'une deuxième fenêtre dite fenêtre réduite (Fr) dont le début est le même que ladite fenêtre (F) et qui est plus courte d'un intervalle correspondant à un élément et de détection d'au moins une transition éventuellement présente dans ladite fenêtre réduite (Fr), la présence itérative d'une ou plusieurs transitions pendant un nombre donné de fois produisant un décalage de ladite première fenêtre (F) de telle sorte que la fin de la fenêtre (F) suivante est temporellement séparée de la première transition détectée dans la fenêtre précédente (F) par un intervalle égal au rythme des paquets en ligne.

2. Procédé selon la revendication 1, caractérisé en ce que la modification de l'intervalle consiste en une réduction de celui-ci.

3. Procédé selon la revendication 1 ou la revendication 2, caractérisé en ce que l'étape d'acquisation et de maintien de la synchronisation comporte une étape de confirmation logique de la synchronisation conduisant à des états logiques respectivement d'acquisition et de maintien de la synchronisation.

4. Procédé selon l'une des revendications précédentes, caractérisé en ce que, lorsqu'aucune transition n'est détectée pendant la durée d'une fenêtre, la modification de l'intervalle consiste à détecter la première transition présente dans le signal et à produire un signal de fenêtre (F) temporellement séparé de ladite première transition détectée par un intervalle égal au rythme des paquets en ligne.

5. Procédé selon l'une des revendications précédentes, caractérisé en ce qu'il comprend une opération consistant à produire de nouveau une étape de recherche de synchronisation, lorsque ledit critère de coïncidence est satisfait seulement par intermittence, ou plus du tout.

6. Procédé selon l'une des revendications 3 à 5, caractérisé en ce qu'il comporte un décodage logique de l'acquisition et/ou du maintien de la synchronisation qui produit une diminution de la largeur de la fenêtre (F), de préférence jusqu'à un seul élément.

## Patentansprüche

1. Verfahren zur Synchronisierung digitaler paketweise übertragener Signale beim Empfang, wobei jedes Paket eine Vielzahl von Übergängen besitzt und bei dem Verfahren die empfangenen Übergänge erkannt und der Paketrhythmus wiedergewonnen wird, wobei das Paket die folgenden Operationen zur Synchronisation auf den Anfang der Pakete aufweist:

a) die Erzeugung von Signalen eines ersten Fensters (F) einer gegebenen Breite und mit Abständen, die dem Rhythmus der übertragenen Pakete entsprechen,

b) die Entdeckung mindestens eines Übergangs, der gegebenenfalls in den empfangenen Signalen während der Dauer jedes Fensters (F) auftritt, und die Bestimmung, ob der oder die während der Dauer jedes Fensters erkannten Übergänge ein Koinzidenzkriterium entsprechend dem Beginn jedes Pakets erfüllen, das in dem Vorliegen eines Übergangs am Ende des Fenstersignals besteht,

c) die Veränderung des Intevalls ($\Delta n'$) zwischen dem Anfang des Fenstersignals und dem Anfang des folgenden Fenstersignals, falls dieses Kriterium nicht erfüllt ist, wobei dies eine Synchronisationssuchetappe darstellt und die Veränderung des Intervalls ($\Delta n'$) dadurch erfolgt, daß ein folgendes Fenster so positioniert wird, daß das Ende dieses Fensters vom ersten in dem vorhergehenden Fenster vorliegenden Übergang durch ein Intervall ($\Delta n$) gleich dem Rhythmus der empfangenen Pakete getrennt ist,

d) die Beibehaltung dieses Intervalls ($\Delta n$) gleich dem Rhythmus der empfangenen Pakete und die Erzeugung eines für die Synchronisation repräsentativen Signals, falls das Kriterium erfüllt ist, wobei dies eine Etappe der Erzielung und des Haltens der Synchronisation darstellt, und wobei dieses Verfahren außerdem während der Etappe des Haltens der Synchronisation eine Operation, bei der ein zweites Fenster, reduziertes Fenster (Fr) genannt, erzeugt wird, dessen Anfang mit dem Anfang des ersten Fensters (F) zusammenfällt und das um ein Intervall·entsprechend·einem Element kürzer ist, sowie eine Operation umfaßt, bei der mindestens ein gegebenenfalls in dem reduzierten Fenster (Fr) auftretender Übergang erkannt wird, wobei das wiederholte Auftreten eines oder mehrerer Übergänge während einer gegebenen Anzahl von Wiederholungen eine Verschiebung des ersten Fensters (F) derart erzeugt, daß das Ende des folgenden Fensters (F) zeitlich gegenüber dem ersten erkannten Übergang im vorhergehenden Fenster (F) durch ein Intervall getrennt ist, das dem Paketrhythmus gleich ist.

2. Verfahren nach Anspruch 1, dadurch gekennzeichnet, daß die Veränderung des Intervalls in einer Verkleinerung des Intervalls besteht.

3. Verfahren nach Anspruch 1 oder Anspruch 2, dadurch gekennzeichnet, daß die Etappe der Erzielung und des Haltens der Synchronisation eine Etappe der logischen Bestätigung der Synchronisation aufweist, die zu logischen Zuständen der Erzielung und des Haltens der Synchronisation führt.

4. Verfahren nach einem der vorhergehenden Ansprüche, dadurch gekennzeichnet, daß die Veränderung des Intervalls, falls während der Dauer eines Fensters kein Übergang festgestellt wird, darin besteht, den ersten im Signal vorliegenden Übergang zu erkennen und ein Fenstersignal (F) zu erzeugen, das zeitlich vom ersten erkannten Übergang durch ein Intervall getrennt ist, das dem Paketrhythmus gleich ist.

5. Verfahren nach einem der vorhergehenden Ansprüche, dadurch gekennzeichnet, daß es eine Operation einschließt, die darin besteht, erneut eine Synchronisationssuchetappe einzuleiten, wenn das Koinzidenzkriterium nur gelegentlich oder überhaupt nicht mehr erfüllt ist. ·

6. Verfahren nach einem der Ansprüche 3 bis 5, dadurch gekennzeichnet, daß es eine logische Dekodierung der Erzielung und/oder des Haltens der Synchronisation aufweist, durch die eine Verringerung der Breite des Fensters (F), vorzugsweise bis auf ein einziges Element, bewirkt wird.

## Claims

1. A method for synchronizing digital signals on reception, which are transmitted in packets, each packet comprising a plurality of transitions, the method including the detection of the received transitions and the retrieval of the rhythm of the packets, said method comprising the following operations in view of the synchronization on the beginning of the packets:

a) generating signals of a first window (F) of a given width at intervals corresponding to the rhythm of the received packets;

b) detecting at least one transition possibly present in the signals received during the presence of each window (F), and determining if the transition(s) detected during the presence of each window satisfy a given coincidence criterion corresponding to the beginning of each packet, consisting in the presence of a transition at the end of the window signal,

c) if the criterion is not satisfied, modifying the interval ($\Delta n'$) between the beginning of the window signal and the beginning of the next-following window signal, this forming a synchronization search step, said modification of the interval ($\Delta n'$) consisting in positioning a next-following window in such a way that the end of this window is separated from the first transition present in the preceding window by an interval $\Delta n$ equal to the rhythm of the received packets,

d) if the criterion is satisfied, maintaining said interval ($\Delta n$) equal to said rhythm of the received packets and producing a signal representative of the synchronization, this forming a synchronization acquisition and holding step, and said method further comprising, during the synchronization holding step, an operation of generating a second window, called reduced window (Fr), the beginning of which is the same as that of said first window (F) and which is shorter by an interval corresponding to one element, and of detecting at least one transition possibly present in said reduced window (Fr), the iterative presence of one or more transitions during a given number of times producing a shift of said first window (F) so that the end of the next-following window (F) is separated in time from the first transition detected in the preceding window (F) by an interval equal to the rhythm of the received packets.

2. A method according to claim 1, characterized in that the modification of the interval consists in a reduction thereof.

3. A method according to claim 1 or claim 2, characterized in that the synchronization acquisition and holding step comprises a logic confirmation step of the synchronization leading to logic states of acquisation and holding of the synchronization respectively.

4. A method according to one of the preceding claims, characterized in that in the absence of any detected transition during a window, the modification of the interval consists in detecting the first transition present in the signal and in producing a window signal (F) which is separated in time from said first detected transition by an interval equal to the rhythm of the received packets.

5. A method according to one of the preceding claims, characterized in that it comprises an operation consisting of producing a new synchronization search step, if said coincidence criterion is satisfied only intermittently or if it is no more satisfied.

6. A method according to one of claims 3 to 5, characterized in that it comprises a logic decoding step for decoding the acquisition and/or the holding of the synchronization which step produces a reduction of the width of the window (F), preferably down to only one element.

Fig.1a

Fig.1b

Fig.1c

Fig.2

HTR

0 056 748

0 056 748

Fig.3a

$\Delta n$

$T_S$

t

$\Delta n'$

F F F

$\varepsilon$ $\varepsilon$ $\varepsilon$

Fig.3b

$T_S$ $T_5$ $T_S$ $T_3$ $T_S$ $T_5$

F F F F

t

$\Delta n-1$ $\Delta n-2$ $\Delta n-2$ $\Delta n$

Fig.3c

$T_S$ $T_S$ $T_S$

t

F

$\Delta n$

Fig.4

0 056 748

Fig. 5

Fig.6a

0 056 748

Fig.6 b

Fig.6 c

Fig.6 d

Fig.7

Fig.8

Fig.9